# EUROPEAN PATENT SPECIFICATION

(11) **EP 1 977 920 B1**
(45) Date of publication and mention of the grant of the patent: **23.06.2010**
(21) Application number: 07007137.8
(22) Date of filing: 05.04.2007
(51) Int. Cl.: B60J 5/10, B60J 7/04

(54) **Motor vehicle door and -roof**
Kraftfahrzeugtür und -Dach
Toit de véhicule et porte de véhicule

(43) Date of publication of application: 08.10.2008
(73) Proprietor: GM Global Technology Operations, Inc., Detroit, MI 48265-3000 (US)
(72) Inventor: Baccelli, Gian Luca, 65232 Taunusstein-Orlen (DE)
(74) Representative: Daniel, Ulrich W.P.

(56) References cited:
- FR-A1- 2 872 096
- US-A- 4 932 717
- US-B1- 6 299 243

## Description

The invention relates to a motor vehicle, in particular to a delivery car.

There are motor vehicles on the market which have a roof of which a portion adjacent to a vertically hinged rear door is folding upwards. In practise, the rear crossbar of this vehicle makes it more difficult to put bulky goods such as mattresses or the like into the vehicle.

Such a folding root is described in FR 2872096.

It is an object of an embodiment of the invention to provide a motor vehicle of the type mentioned above which provides a better access to the interior when loading the car with bulky goods.

This object is solved by the features of the independent claim. Further embodiments are described by the sub-claims.

A first embodiment of the motor vehicle has a roof, whereby a portion of the roof adjacent to a vertically hinged rear door is folding upwards. The rear roof crossbar is integrated into the rear door.

The portion of the roof adjacent to the vertically hinged rear door might be a window. It has a rotation axis in the roof plane which is aligned crosswise to the longitudinal axis of the vehicle. When this portion of the roof is folding upwards it rotates away from the rear door and from the rear roof crossbar providing an opening adjacent to said rear roof crossbar. In the prior art the rear roof crossbar is part of the roof frame. By integrating the rear roof crossbar into the rear door said opening is combined with the rear door opening. When the rear door is open and when said portion of the roof is lifted upwards the rear crossbar does not impede the user to put bulky goods inside. As a consequence, access to the interior is improved.

In a second embodiment the rear door is vertically split into a left door and a right door, whereby the rear roof crossbar is correspondingly split into a left part and a right part. Each part of the door is vertically hinged, whereby the left door houses the left part of the rear crossbar and whereby the right door houses the right part of the rear roof crossbar. This is often the case with delivery cars or vans where the transport of large good is facilitating the work.

In a further embodiment fastening means are provided for detachably fastening the left part of the rear crossbar to the right part of the rear crossbar. As the rear crossbar generally provides stiffness to a car body the fastening means guarantee an improved stiffness when the rear door is closed.

Another embodiment suggests that the fastening means comprises a bolt engaging into a bow upon closing the rear door. The bolt is thus comfortably activated by shutting the rear door.

In a further embodiment the rear crossbar comprises a bolt engaging into an opening of the rear door opening. In this way the split rear crossbar is connected to the car body as a prerequisite for providing transverse stiffness.

In another embodiment the rear door opening contains a reinforcement. As the split rear crossbar somewhat weakens the car body stiffness despite the use of fastening means this is compensated by reinforcing the opening contour between the doors and the roof.

Further elements and advantages of the claimed invention will be apparent from the following detailed description with reference to the accompanying drawings. This description should be understood to represent nonlimiting examples of the invention. Furthermore, the use of reference signs in the drawings shall not be understood as limiting the scope of the claimed invention.

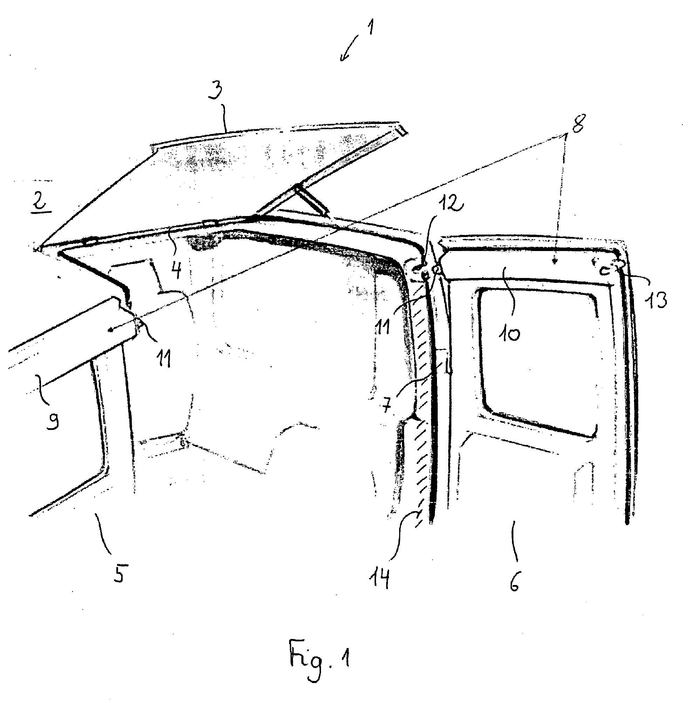

- Fig. 1: shows a motor vehicle according to an
embodiment of the invention.

Figure 1 shows a motor vehicle 1, namely a delivery car, which has a roof 2, of which a portion 3 is folded upwards by rotating it along an axis 4 lying in the roof plane and being aligned perpendicular to the longitudinal axis of the motor vehicle 1. The motor vehicle 1 has a split rear door with a left door 5 and a right door 6, each of which is vertically hinged by means of hinges 7.

The motor vehicle 1 has a split rear crossbar 8 which is integrated into the rear door 5, 6. The left door 5 houses a left part 9 of the rear crossbar 8. Correspondingly, the right door 6 houses the right part 10 of the rear crossbar 8.

The left part 9 and the right part 10 of the rear crossbar 8 each have a bolt 11 which engages into an opening 12 of the contour of the rear door opening. Furthermore, the right part 10 of the rear crossbar 8 has a bow 13. When closing the rear door 5, 6 a bolt 11 of the left door 5 engages into it to connect the two parts. To provide more transverse stiffness, the opening contour of the rear door 5, 6 has a reinforcement 14 which is indicated by the dashed lines. Preferably, the reinforcement is along the whole contour of the rear door opening.

As can be derived from Fig. 1, access to the interior is improved by integrating the rear crossbar into the doors 5, 6.

Although a particular embodiment of the invention has been described, it should be understood that this is not intended to limit the invention to the particular form disclosed, but, on the contrary, the invention covers all modifications, embodiments, equivalents and alternatives falling within the scope of the claimed invention.

### List of reference numerals

- 01: motor vehicle
- 02: roof
- 03: portion
- 04: axis
- 05: left door
- 06: right door
- 07: hinge
- 08: rear crossbar
- 09: left part of rear crossbar
- 10: right part of rear crossbar
- 11: bolt
- 12: opening
- 13: bow
- 14: reinforcement

## Claims

1. Motor vehicle, comprising
a) a roof (2), whereby a portion (3) of the roof adjacent to a vertically hinged rear door (5,6) is folding upwards,
b) a rear roof crossbar (8) being integrated into the rear door.

2. Motor vehicle according to claim 1, whereby the rear door is vertically split into a left door (5) and a right door (6) and whereby the rear roof crossbar is correspondingly split into a left part (9) and a right part (10).

3. Motor vehicle according to claim 2, with fastening means (11,13) for detachably fastening the left part to the right part.

4. Motor vehicle according to claim 3, whereby the fastening means comprises a bolt (11) engaging into a bow (13) upon closing the rear door.

5. Motor vehicle according to any of the preceding claims, whereby the rear crossbar comprises a bolt (11) engaging into an opening (12) of the rear door opening.

6. Motor vehicle according to any of the preceding claims, whereby the rear door opening (12) contains a reinforcement (14).

7. Motor vehicle according to any of the preceding claims, whereby the motor vehicle is a delivery car.

## Patentansprüche

1. Kraftfahrzeug, das Folgendes umfasst:
a) ein Dach (2) wobei ein Teil (3) des Daches angrenzend an eine senkrecht aufgehängte Hecktür (5, 6) aufwärts klappbar ist,
b) einen hinteren Dachquerbalken (8), der in die Hecktür integriert ist.

2. Kraftfahrzeug gemäß Anspruch 1, wobei die Hecktür senkrecht in eine linke Tür (5) und eine rechte Tür (6) geteilt ist und wobei der hintere Dachquerbalken entsprechend in einen linken Teil (9) und einen rechten Teil (10) geteilt ist.

3. Kraftfahrzeug gemäß Anspruch 2, mit Befestigungsmitteln (11, 13), mit denen der linke Teil trennbar am rechten Teil befestigt werden kann.

4. Kraftfahrzeug gemäß Anspruch 3, wobei die Befestigungsmittel einen Bolzen (11) umfassen, der nach Schließen der Tür in einen Bogen (13) eingreift.

5. Kraftfahrzeug gemäß einem der vorangehenden Ansprüche, wobei der hintere Querbalken einen Bolzen (11) umfasst, der in eine Öffnung (12) der hinteren Türöffnung eingreift.

6. Kraftfahrzeug gemäß einem der vorangehenden Ansprüche, wobei die hintere Türöffnung (12) eine Verstärkung (14) umfasst.

7. Kraftfahrzeug gemäß einem der vorangehenden Ansprüche, wobei das Kraftfahrzeug ein Lieferwagen ist.

## Revendications

1. Véhicule à moteur comprenant :
a) un toit (2), dans lequel une partie (3) du toit adjacente à une porte arrière (5, 6) articulée verticalement se replie vers le haut ;
b) une traverse arrière de toit (8) étant intégrée dans la porte arrière.

2. Véhicule à moteur selon la revendication 1, dans lequel la porte arrière est partagée verticalement en une porte de gauche (5) et une porte de droite (6) et dans lequel la traverse de porte arrière est partagée de manière correspondante en une partie de gauche (9) et une partie de droite (10).

3. Véhicule à moteur selon la revendication 2, avec des moyens de fixation (11, 13) pour la fixation amovible de la partie de gauche à la partie de droite.

4. Véhicule à moteur selon la revendication 3, dans lequel le moyen de fixation comprend un boulon (11) se mettant en prise dans un arc (13) lors de la fermeture de la porte arrière.

5. Véhicule à moteur selon l'une quelconque des revendications précédentes, dans lequel la traverse arrière comprend un boulon (11) qui se met en prise dans une ouverture (12) de l'ouverture de porte arrière.

6. Véhicule à moteur selon l'une quelconque des revendications précédentes, dans lequel l'ouverture de porte arrière (12) contient un renfort (14).

7. Véhicule à moteur selon l'une quelconque des revendications précédentes, dans lequel le véhicule est une voiture de livraison.
